# EUROPÄISCHE PATENTANMELDUNG

(11) **EP 0 875 637 A2**
(43) Veröffentlichungstag der Anmeldung: **04.11.1998**
(21) Anmeldenummer: 98107898.3
(22) Anmeldetag: 30.04.1998
(51) Int. Cl.: E04D 11/00

(54) **Schrägdachbegrünung**

(30) Priorität: 02.05.1997 DE 29707887 U
(71) Anmelder: FUNKE KUNSTSTOFFE GMBH, 48324 Sendenhorst (DE)
(72) Erfinder: Funke, Norbert, 48324 Sendenhorst (DE); Funke, Hans-Günter, 48324 Sendenhorst (DE)
(74) Vertreter: Hoffmeister, Helmut, Dr. Dipl.-Phys.

(57) **Zusammenfassung**

Damit bei einer Schrägdachbegrünung eine Vegetationsschicht sicher ge- und erhalten wird, werden Rasengitterplatten verwendet, die aus einer Vielzahl von in Wabenstruktur angeordneten Zellen bestehen, die wenigstens eine Flüssigkeitsleitausnehmung aufweisen und die mit Verbindungs- und Halteelementen (9, 40) über einer Deckschicht (4, 5, 6) als Gitterplattenschicht (25) verlegt sind. Die Deckschicht (4, 5, 6) und die Gitterplattenschicht (25) sind auf Schrägdachelementen (35, 36) eines Spitzdaches (30) angeordnet. Auf der Gitterplattenschicht (25) wird dann die Vegetationsschicht gehalten und erhalten.

## Beschreibung

Die Erfindung betrifft ein Verfahren und eine Einrichtung zur Begrünung von Schrägdächern, die wenigstens ein Schrägdachelement aufweisen mit
- wenigstens einem Plattenelement, die auf dem Schrägdachelement angeordnet sind, und
- einer Vegetationsschicht, die auf die Plattenelemente aufgelegt wird.

Eine Einrichtung zur Begrünung von Schrägdächern ist aus der DE 37 12 867 A1 bekannt. Auf einer geneigten Dachfläche wird eine plattenförmige Wasserfangschale verlegt. Die Wasserfangschale weist napfartige, untereinander durch Kanäle verbundene Kammern auf, die eine nach oben hin lichte Öffnung haben. Die Kanalböden befinden sich im Abstand über den Kammerböden. Ein Drainagerohr ist ebenfalls vorgesehen und zwischen Füllmaterial angeordnet. Ein Krallgewebe liegt über dem Drainagerohr und der Wasserfangschale und trägt eine Substratschicht.

Nachteilig ist, daß die Wasserfangschalen nur die Aufgabe haben, einen ständig vorhandenen Wasserstau von der Dachhaut fernzuhalten, wobei dies auch für geneigte Dachflächen gelten soll. Zu dieser Pfützenbildung kommt es aber nur bei einer Dachneigung bis zu ca. 3°. Bei einer Dachneigung von mehr als 3° sind besondere Maßnahmen vorzusehen, die ein Abgleiten der Vegetationsschicht verhindern. Ab ca. 30° können Dachbegrünungen nur in Ausnahmefällen realisiert werden. Bei dieser Neigung sind zusätzliche Sicherungsmaßnahmen wie z. B. Lattenroste oder dergleichen notwendig, die sehr kostenaufwendig sind. Diese besonderen Forderungen, die von LECH, Jürgen und APPL, Roland: Dachkonstruktionen, die zu begrünen sind, in DACH + GRÜN 1/98, S. 26 bis 30, werden durch die bekannten Wasserfangschalen in keinster Weise einer Lösung zugeführt.

Aus der DE 40 04 284 C1 ist eine Bio-Masse in Form einer trockenen Substratmischung sowie ein Verfahren zur Begrünung von Flächen bekannt. Die Bio-Masse enthält Saatgut und/oder Pflanzenteile und/oder Moose sowie Düngemittel und Bindemittel in Form von Kleber. Um die Bio-Masse auf die jeweilige Fläche aufbringen zu können, ist vorgesehen, daß das Bindemittel ein mit der Bio-Masse vermischbarer Trockenkleber ist, der in Verbindung mit Wasser eine Klebewirkung herbeiführt und daß die den Trockenkleber enthaltende Bio-Masse eine rieselfähige Beschaffenheit besitzt.

Um eine Dachbegründung zu ermöglichen, wird in der DE 44 13 260 A1 (EP 0 677 242 A1) ein Vegetationssubstrat und ein Vegetationssystem zur Begrünung angegeben. Das Vegetationssubstrat enthält Schadstoff adsorbierendes und/oder Schadstoff abbauendes und/oder Schadstoffe in schädliche Stoffe umwandelndes Material auf der Grundlage kohlenhaltiger Stoffe. Außerdem sind dem Vegetationssubstrat gezielt solche Mikroorganismen beigegeben, welche geeignet sind, bestimmte wählbare Schadstoffe abzubauen und/oder in unschädliche Stoffe umzuwandeln. Das Vegetationssystem umfaßt eine untere Drainage- und Belüftungsschicht mit einer oberen Trennschicht, auf der sich eine das Vegetationssubstrat enthaltende vorkultivierte Vegetationsschicht bzw. Vegetationsmatte befindet. Die Vegetationsschicht wird durch ein auf Braunkohle- und/oder Holzkohlebasis beruhendes Perlhumus gebildet.

Nachteilig ist, daß die Vegetationsschicht locker aufgelegt ist und bei einer Schrägdachbegrünung einem pflanzengemäßen Halt nicht gerecht wird.

Ein aus mehreren Schichten bestehendes Vegetationselement für die Begrünung von großflächigen Dächern ist aus der DE 195 23 406 C1 bekannt. Hierbei sind die einzelnen Schichten durch Pfähle miteinander verbunden. Als unterste Schicht ist ein poröses Vlies vorgesehen, an welches sich als nächste Schicht eine Steinwollschicht und eine durch Saatgut und durch lebende Pflanzenteile gebildete Wachstumsschicht anschließen. Als oberste Schicht ist eine Halteschicht bzw. Schutzschicht vorgesehen. Alternativ folgt auf die untere porösere Vliesschicnt eine Mineralwollschicht, an die sich eine gemischte Kokos-Pflanzenschicht anschließt, die durch eine mit Saatgut und lebenden Pflanzenteilen vermischte Kokosschicht gebildet ist. Hierdurch ist es möglich, einzelne Vegetationselemente für den jeweiligen konkreten Bedarf zu produzieren und innerhalb kurzer Zeit zu verarbeiten. Allerdings sind die Vegetationselemente nur für ein Aufliegen auf Schrägdächer vorgesehen.

Aus der EP 0 400 158 A1 ist eine Rasengitterplatte bekannt, die allerdings nur zur Befestigung von Rasenflächen auf Gehwegen und Böschungen vorgesehen ist. Sie besteht aus Zellen, die in Wabenstruktur zueinander angeordnet sind. Die Zellen weisen in ihrem Boden eine Öffnung auf. Die Rasengitterplatte ist einstückig ausgebildet und mit ansetzbaren benachbarten Rasengitterplatten verbindbar.

Aus der DE 44 16 943 A1 ist ein Reitplatzaufbau bekannt. Hierbei wird oberhalb eines Baugrund eine Gitterplattenschicht aus miteinander verbundenen Rasengitterplatten ausgelegt. In und auf diese Gitterplattenschicht werden dann die für Reitplatzaufbauten bekannten Schichten aufgebracht.

Der Erfindung liegt die Aufgabe zugrunde, eine Schrägdachbegrünung der eingangs genannten Art so weiter zu entwickeln, daß die Vegetationsschicht sicher ge- und erhalten wird.

Erfindungsgemäß wird diese Aufgabe durch die Merkmale des Anspruchs 1 oder 2 gelöst.

Die mit der Erfindung erzielten Vorteile bestehen insbesondere in der Verwendung der sonst für Rasenbefestigungen eingesetzten Rasengitterplatten für eine Schrägdachbegrünung. Rasengitterplatten sind so ausgebildet, daß sie hohe Belastungskräfte zerstörungsfrei für sich und den Rasen aufnehmen können. Ihre besondere Zellenform sichert, daß die für die Vegetationsschicht erforderlichen Bestandteile sicher gehalten und versorgt werden. Die zu einer Gitterplattenschicht zusammengesetzten Rasengitterplatten sind darüber hinaus in der Lage, als teilweise tragende Konstruktion Belastungskräfte von den Schrägdachelementen wenigstens teilweise abzuhalten bzw. gleichmäßig zu verteilen. Die Zellen sichern, daß die Vegetationsschicht nicht nur gehalten, sondern ganz gezielt mit Flüssigkeit versorgt werden kann. Hierfür sorgen die Flüssigkeitsleitausnehmungen, die den Wasserhaushalt der Vegetationsschicht optimal zu regeln in der Lage sind. Die zwischen dem Schrägdachelement und der Gitterplattenschicht angeordnete Deckschicht trägt zur Steuerung des Flüssigkeitshaushaltes bei, unterstützt die artgerechte Ernährung und auch Verankerung der Vegetationsschicht und verhindert ein Zerstören der Schrägdachelemente durch die Wurzeln der Vegetationsschicht.

Jede Rasengitterplatte kann derart mit Rasengitterlementen versehen sein, daß
- an einer durch wandparallele Wände der Zellen einer Zellenreihe ausgebildeten Berührungsfläche an wenigstens jeder zweiten Wand ein T-förmig ausgebildetes Verhakungselement mit einer in Richtung Zelle zeigender Schulter angeordnet ist, dem eine in der Wand in der gleichen Zellenreihe der gegenüberliegenden Berührungsfläche eingebrachte kompatible Verhakungsausnehmung gegenüberliegt, und
- an einer durch die schräg zueinander stehenden Wände einer Zellenreihe gebildeten Berührungsfläche in wenigstens jedem zweiten Einschlußwinkel eine Verhakungsausnehmung angebracht ist, der in zwischen zwei abgeschrägten Wänden einer Zellenreihe einer gegenüberliegenden Berührungsfläche gebildeten Winkel ein kompatibles T-förmig ausgebildetes Verhakungselement gegenüberliegt, an dessen Schulter Anschrägungen angeordnet sind.

Hierdurch ist eine sichere und mechanische Verbindung der einzelnen Rasengitterplatten untereinander gewährleistet. Es liegen sich zwei durch die Wandflächen der Zellenreihen gebildete Berührungsflächen kraftschlüssig gegenüber. Hierdurch erhält die Gitterplattenschicht eine nicht unbedeutende Festigkeit. Die Gitterplattenschicht ist bis zu 100 t/m² belastbar, und das bei einem Gewicht von nur 5 kg/m².

Jede Zelle der Rasengitterplatten ist mit einem Boden verschlossen. In dem Boden kann eine kreisrunde Öffnung als Flüssigkeitsleitausnehmung angeordnet sein. Diese kreisrunde Öffnung kann mit einem Bodenring mit einer Höhe umschlossen sein. Diese Höhe kann entsprechend variiert werden. Darüber hinaus kann um die in etwa mittig im Boden der Zelle angeordnete kreisrunde Öffnung wenigstens eine weitere Zusatzöffnung angebracht sein. Die Zusatzöffnungen sind dann beabstandet untereinander angeordnet. Darüber hinaus können an jedem der oberen Ränder der Wände der Zellen eine Aussparung eingebracht sein. Diese Aussparungen können gerundet und/oder eckig ausgebildet sein. Mit diesen Maßnahmen einzeln oder gebündelt kann der Wasserhaushalt in den einzelnen Zellen beeinflußt werden. Wird die Schrägdachbegrünung in sehr regenträchtigen Gegenden aufgebaut, werden in den Zellenboden neben der kreisrunden Öffnung noch weitere Zusatzöffnungen eingebracht. Hierdurch wird auftreffender Regen gezielt aus den Zellen, dessen Zellenwände eine Länge von ca. 35 mm oder größer haben können, abgeleitet, so daß die Vegetationsschicht nicht durch die Flüssigkeit ertränkt wird. Die Aussparungen in den Zellenwänden sorgen dafür, daß auftreffender Regen ganz gezielt geleitet und gelenkt wird. Wird die Schrägdachbegrünung jedoch hingegen in sehr regenarmen Gegenden eingesetzt, kommen die Bodenringe zum Einsatz, die die kreisrunde Öffnung umschließen. Der Boden ist durchgängig verschlossen. Auf die Schrägdachbegrünung fallender Regen wird so abgeleitet und gezielt in den einzelnen Zellen gespeichert. Die Bodenringe sichern, daß eine ganz bestimmte Menge Restfeuchte festgehalten und für die Wasserversorgung der Vegetationsschicht eingesetzt werden können. Die Rasengitterplatten können dabei folgende Abmessungen aufweisen: 33 x 33 x 3,6 cm, 33 x 33 x 3,8 cm bzw. 33 x 64 x 3,8 cm.

Für die Schrägdachbegrünung können Mattenbolzen eingesetzt werden. Die Mattenbolzen bestehen aus einem Haltestiftelement und an diesem angeordneten zwei oder drei Klammerfußelementen. Mit den Klammerfußelementen kann der Mattenbolzen auf wenigstens eine Wand aufgesteckt werden. Das Haltestiftelement sorgt dafür, daß die Vegetationsschicht wenigstens teilweise gehalten wird. Die Klammerfußelemente können darüber hinaus dazu dienen, nicht miteinander verhakte Rasengitterplatten anderer Ausbildungsform untereinander zur Gitterplattenschicht zu verbinden.

Die Deckschicht kann wie folgt aufgebaut werden:
Auf das Schrägdachelement kann eine Untervliesschicht gelegt werden. Auf diese Untervliesschicht kann eine Wurzelschicht angeordnet werden und auf diese wiederum eine Auflageschicht, auf der dann die Vegetationsschicht ruht. Die Untervliesschicht dient dazu, Feuchtigkeit von der Dachaußenhaut des Schrägdachelements fernzuhalten und abzuleiten. Damit wird ein Vermodern der Dachhaut verhindert. Die wurzelfeste Folie verhindert, daß die Wurzeln der Vegetationsschicht die Dachhaut aktiv angreifen und zersetzen. Die Auflageschicht hingegen sichert ein geregeltes Abführen überflüssiger Feuchtigkeit, die aus der Gitterplattenschicht heraustritt gezielt in eine Traufe oder ein ähnliches Wasserabführsystem abzuführen.

Die Auflageschicht kann dabei als
- eine Obervliesschicht,
- eine Speichermatte oder
- eine Bautenschutzmatte
ausgebildet sein.

Die Obervliesschicht kann dabei eine Glatte Fließfläche aufweisen. Die Speichermatte hingegen kann Noppen und Noppenausnehmungen und die Bautenschutzmatte wenigstens eine durchgehende Tunnelausnehmung aufweisen. Hierdurch kann dem unterschiedlichen Flüssigkeitsanfall, der aus der Gitterplattenschicht heraustritt, Rechnung getragen werden.

Die Vegetationsschicht kann eine Begrünungsmatte aufweisen, die mit Vegetation auf der Gitterplattenschicht aufzulegen ist. Die Begrünungsmatte kann dabei aus Kokosfasern bestehen, in der Grünpflanzen als Vegetation angeordnet sind. Der besondere Vorteil der Begrünungsmatte liegt darin, daß sie wie Rollrasen nur auf der Gitterplattenschicht ausgerollt werden braucht und nach Fertigstellung ein fertig begrüntes Dach zur Verfügung steht.

Hierbei können die Zellen der einzelnen Rasengitterplatten mit einem Dachsubstrat verfüllt sein, in dem sich die Pflanzen mit ihren Wurzeln verankern und Feuchtigkeit und Nährstoffe herausziehen können.

Die Vegetationsschicht kann aber auch so hergestellt werden, daß die einzelnen Zellen der Rasengitterplatten mit dem Dachsubstrat verfüllt sind und in dem Dachsubstrat die Grünpflanzen, Sedumpflanzen oder dergleichen, in einer bestimmten Entwicklungsstufe vorbegrünt gewachsen sind. Diese einzelnen Rasengitterplatten werden dann auf den einzelnen Schrägdachelementen ausgelegt.

Die Rasengitterplattenschichten zweier Schrägdachelemente können im First eines Daches mit wenigstens einem Verankerungselement verbunden sein. Dieses Verankerungselement kann ein Verankerungsflächenelement aufweisen, auf dem beabstandet untereinander Ankerelemente angeordnet sind. Diese Ankerelemente können wenigstens teilweise in die Öffnungen der Zellen eingreifen. Vorzugsweise sind die Ankerelemente in einer Reihe so angeordnet, daß sie in die Öffnungen der letzten Zellenreihe der Rasengitterplatte im Firstbereich der Gitterplattenschichten eingreifen. Hierdurch wird erreicht, daß das Gewicht der Rasengitterplattenschichten mit den darauf befindlichen Schichten für die Vegetation einschließlich Schichten in den einzelnen Zellen und dergleichen vom First des Daches "geschultert" wird.

Im Traufenbereich kann die Gitterplattenschicht auf dem Schrägdachelement durch ein Traufenverankerungselement wenigstens teilweise gehalten werden. Zusammen mit den bereits beschriebenen Verankerungselement stellen sie weitere Verankerungs- und Verbindungselemente für die einzelnen Rasengitterplatten dar. Das Verankerungselement kann dabei aus einem Aufsatzplattenelement bestehen. Dieses kann unter dem Untervliesstoff auf dem Schrägdachelement wenigstens teilweise angeordnet sein. Auf dem Aufsatzplattenelement kann dann ein Drainagekörper mit wenigstens einem Drainageschlitz angeordnet sein. Die Drainageschlitze können auch anders ausgebildete Ausnehmungen, z.B. Löcher oder dergleichen, sein. Hinter diesem Drainagekörper geht dann das Aufsatzplattenelement in ein Traufenelement über, das das jeweilige Schrägdachelement des Daches traufenseitig abschließt. Der Drainagekörper kann dabei als aufgesetzter Teilkörper oder aber auch als einteilig geformter Körper aus einem Blech, aus dem das Aufsatzplattenelement und das Traufenelement hergestellt sind, ausgebildet sein.

Die Begrünungsmatte kann aus Kokosfasern hergestellt sein. Die wurzelfeste Folie kann eine Polyvinylchlorid- oder eine Polyethylen-Folie sein. Die Vliesschichten können aus Polyamidfasern oder dergleichen hergestellt sein. Die Rasengitterplatten können als Kunststoff-Spritzgußteile ausgebildet sein. Die Speichermatten können aus Polyurethanschaum und die Bautenschutzmatten aus Polyethylen hergestellt sein. Der Einsatz dieser Werkstoffe gewährleistet, daß das System der Schrägdachbegrünung sämtlichen Witterungseinflüssen auf lange Zeit Stand halten kann.

Die Erfindung ist in der Zeichnung dargestellt und wird im folgenden näher beschrieben. Es zeigen:
- Fig. 1: eine Teilansicht einer Schrägdachbegrünung,
- Fig. 2a und 2b: Teildraufsichten einer Schrägdachbegrünung gemäß Fig. 1 in verschiedenen Aufbauphasen,
- Fig. 3: einen vergrößerten Ausschnitt aus einer Schrägdachbegrünung gem. Fig. 1 und
- Fig. 4: eine erste Ausführungsform einer Rasengitterplatte für eine Schrägdachbegrünung gemäß den Fig. 1 bis 3 in einer schematisch dargestellten Draufsicht,
- Fig. 5: eine zweite Ausführungsform einer Rasengitterplatte für eine Schrägdachbegrünung gemäß den Fig. 1 bis 3 in einer schematisch dargestellten Draufsicht,
- Fig. 6: einen Ausschnitt VI aus einer Rasengitterplatte gemäß Fig. 5,
- Fig. 7: einen Schnitt durch eine Rasengitterplatte gemäß Fig. 4 entlang der Linie VII - VII,
- Fig. 8: einen Schnitt durch eine Rasengitterplatte gemäß Fig. 5 entlang der Linie VIII - VIII,
- Fig. 9: zwei Rasengitterplatten gemäß Fig. 4, 7 und 8 vor einer Verlegung in einer schematisch dargestellten Draufsicht,
- Fig. 10: zwei Rasengitterplatten gemäß den Fig. 4, 7 und 8 im verlegten Zustand,
- Fig. 11: einen Haltebolzen für eine Schrägdachbegrünung gemäß den Fig. 1 bis 3 in einer schematischen, perspektivischen Darstellung,
- Fig. 12: eine erste Ausführungsform einer Mattenbeschichtung für eine Schrägdachbegrünung gemäß den Fig. 1 bis 3,
- Fig. 13: eine zweite Ausführungsform einer Mattenbeschichtung für eine Schrägdachbegrünung gemäß den Fig. 1 bis 3,
- Fig. 14: eine dritte Ausführungsform einer Mattenbeschichtung für eine Schrägdachbegrünung gemäß den Fig. 1 bis 3,
- Fig. 15: ein Plattenverankerungselement für eine Halterung der Rasengitterplatten gemäß den Fig. 4 bis 10 für eine Schrägdachbegrünung gemäß den Fig. 1 bis 3,
- Fig. 16: einen Schnitt durch ein Plattenverankerungselement gemäß Fig. 15 entlang der Linie XVI - XVI,
- Fig. 17: eine weitere Ausführungsform eines Traufenverankerungselements für eine Schrägdachbegrünung gemäß den Fig. 1 bis 3,
- Fig. 18: auf einem Spitzdach verlegte Rasengitterplatten gemäß den Fig. 4 bis 10 für eine Schrägdachbegrünung gemäß den Fig. 1 bis 3,
- Fig. 19: einen Ausschnitt XIX aus einem Spitzdach gemäß Fig. 18 in einer vergrößerten Darstellung mit un- und begrünten Rasengitterplatten und
- Fig. 20: eine Begrünungsmatte für eine Schrägdachbegrünung gemäß den Fig. 1 bis 3.

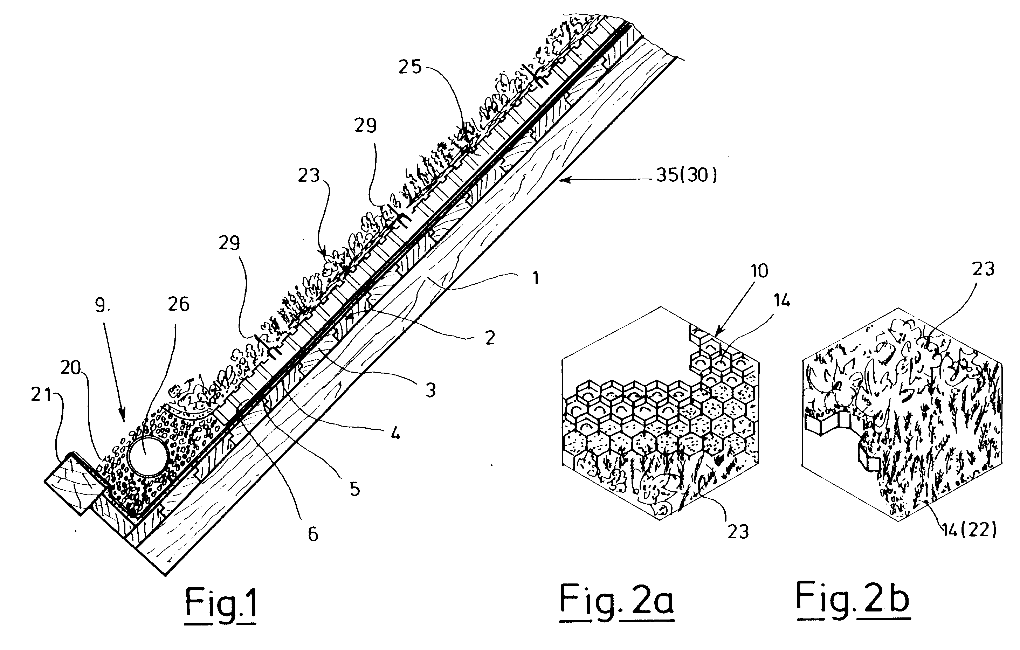

In Fig. 1 bis 3, 18 und 19 ist eine Schrägdachbegrünung dargestellt.

Auf Dachbalken 1 eines Schrägdachflächenelementes 35 bzw. 36 eines Spitzdachs 30 ist eine Dachbretterverschalung 2 aufgebracht. Sie besteht aus einzelnen Dachbrettern 3, die durch an ihren Außenseiten angeordneten Nuten und Federn untereinander verbunden sind.

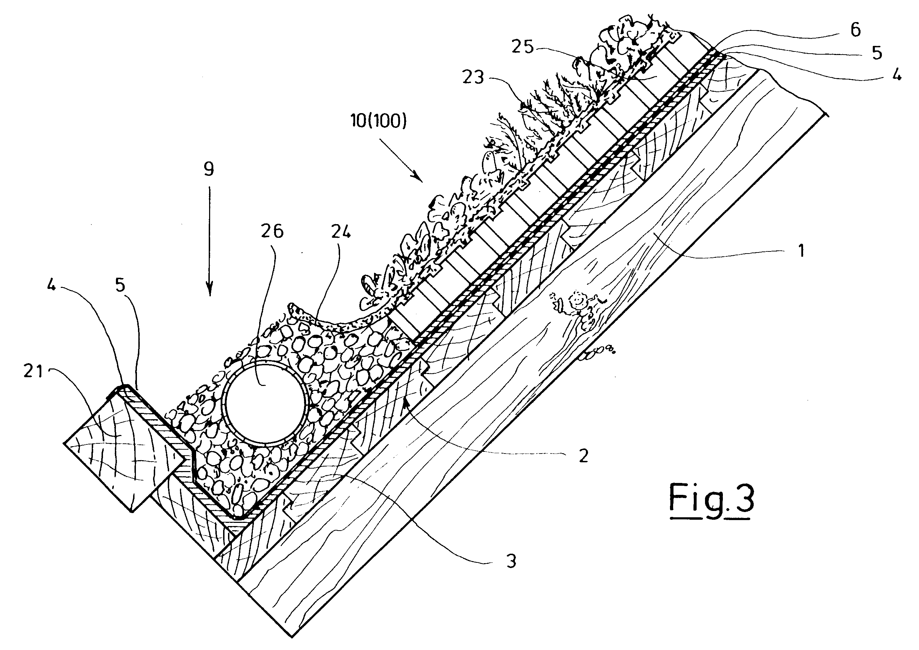

Auf der Dachbretterverschalung 2 ist eine Mattenbeschichtung lausgelegt. Sie besteht aus einer Untervliesschicht 4, die direkt auf die Bretterverschalung 2 aufgelegt wird. Über der Untervliesschicht 4 erstreckt sich eine wurzelfeste Folie 5 und über dieser eine Auflageschicht 6 (vgl. Fig. 1 und 3).

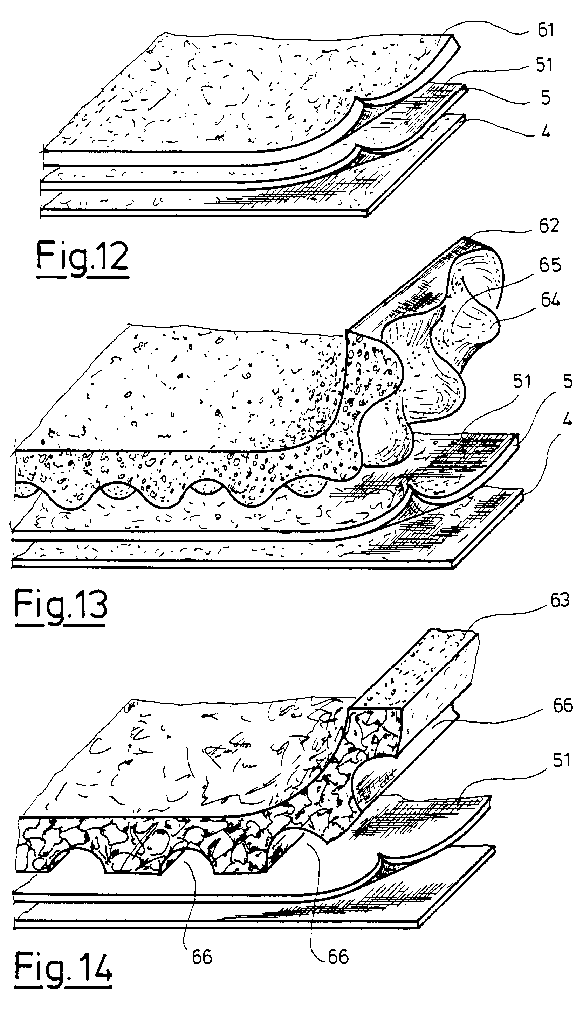

Die Auflageschicht 6 kann, wie die Fig. 12, 13 und 14 aufweisen, unterschiedlich ausgebildet sein.

In Fig. 12 ist die Auflageschicht 6 eine Obervliesschicht 61. Sie weist gegenüber der unter ihr liegenden wurzelfesten Folie 5 eine im wesentlichen glatte Vliesfläche 67 auf. Die ihr gegenüberliegende Fläche ist ebenfalls glatt ausgebildet. Die Obervliesschicht 61 hat die Aufgabe, Flüssigkeit zu speichern. Ebenso wie die Untervliesschicht 4 ist die Obervliesschicht 61 zu diesem Zweck aus Polyamidfasern hergestellt.

In Fig. 13 ist die Auflageschicht 6 als Speichermatte 62 ausgebildet, die aus einem Polyurethanschaum besteht. Charakteristisch ist, daß die der wurzelfesten Folie 5 gegenüberliegende Fläche der Speichermatte 62 nach vorne gewölbte Noppen 64 mit dazwischenliegenden Noppenausnehmungen 65 aufweist. Die diese genoppten Fläche gegenüberliegende Fläche der Speichermatte 62 ist glatt ausgebildet. Der Polyurethanschaum der Speichermatte 62 sorgt dafür, daß gezielt eine Menge von Feuchtigkeit in Abhängigkeit von der Dicke der Speichermatte 62 gespeichert wird. Die darunterliegenden Noppen stütze die Speichermatte 62 gegenüber der wurzelfesten Folie 5 ab, so daß überflüssige bzw. herausgedrückte Flüssigkeit ganz gezielt über der wurzelfesten Folie abfließen kann.

In Fig. 13 ist die Auflageschicht 6 als Bautenschutzmatte 60 realisiert. Die Bautenschutzmatte 63 wird bei der Schrägdachbegrünung nicht einem Bautenschutz im herkömmlichen Sinne, sondern gleichfalls zur gezielten Lenkung und Leitung der Flüssigkeit genutzt. Hervorhebendes Merkmal der Bautenschutzmatte sind auf der Unterseite befindliche Tunnelausnehmungen 66, die beabstandet untereinander angeordnet sind. Die Bautenschutzmatte 60 besteht aus Polyethylen. Das Polyethylen ist gehäckselt und zur Matte zusammengefügt. Verwendung finden Polyethylenreste, die entsprechend gehäckselt werden. Auf der der mit den Tunnelausnehmungen 66 versehenen Unterseite gegenüberliegenden glatten Fläche ist ein sehr dünner Vlies angeordnet. Bei Aufsetzen der Bautenschutzmatte 63 auf das im wesentlichen glatte Folienflächenelement 51 der wurzelfesten Folie 5 entstehen Drainagekanäle, durch die Feuchtigkeit, Wasser und andere Flüssigkeiten, gezielt abgeführt werden. Die wurzelfeste Folie 5 übernimmt dabei Funktionen in einem speziellen Wasserleitsystem. Innerhalb der gehäckselten Schaumbestandteile der Bautenschutzmatte 63 hingegen kann Feuchtigkeit ganz gezielt gespeichert und gehalten werden.

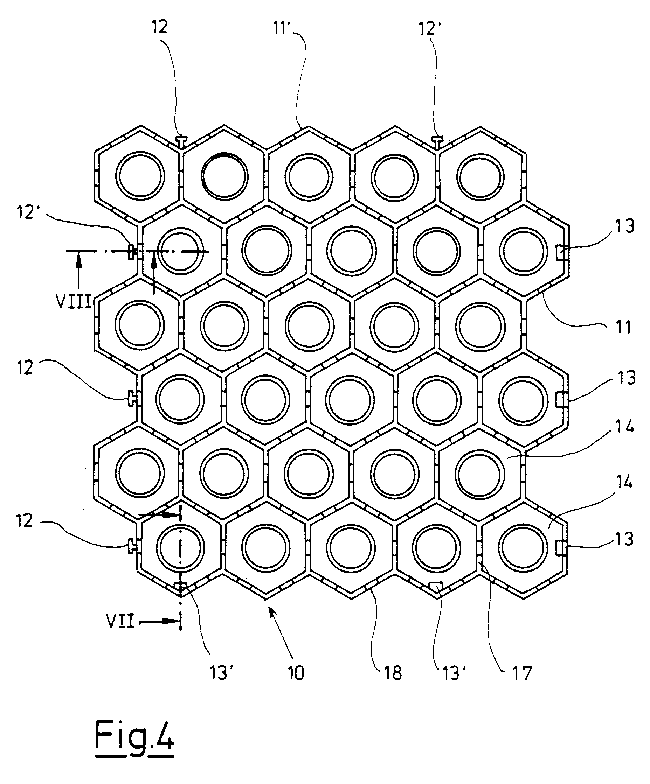

Auf die Obervliesschicht 61, die Speichermatte 62 oder die Bautenschutzmatte 63 der so unterschiedlich ausgebildeten Auflageschicht 6 ist eine Gitterplattenschicht 25 ausgelegt. Die Gitterplattenschicht 25 besteht aus einzelnen Rasengitterplatten 10, 100, die in den Fig. 4 bis 10 gezeigt sind. Sie weisen seitliche Berührungsflächen 11, 11', 110, 110' auf, die sich mit einer benachbarten Rasengitterplatte mittels Verhakungselemente 12, 12', 13, 13' bzw. 112, 112' bzw. 113, 113' verhaken lassen.

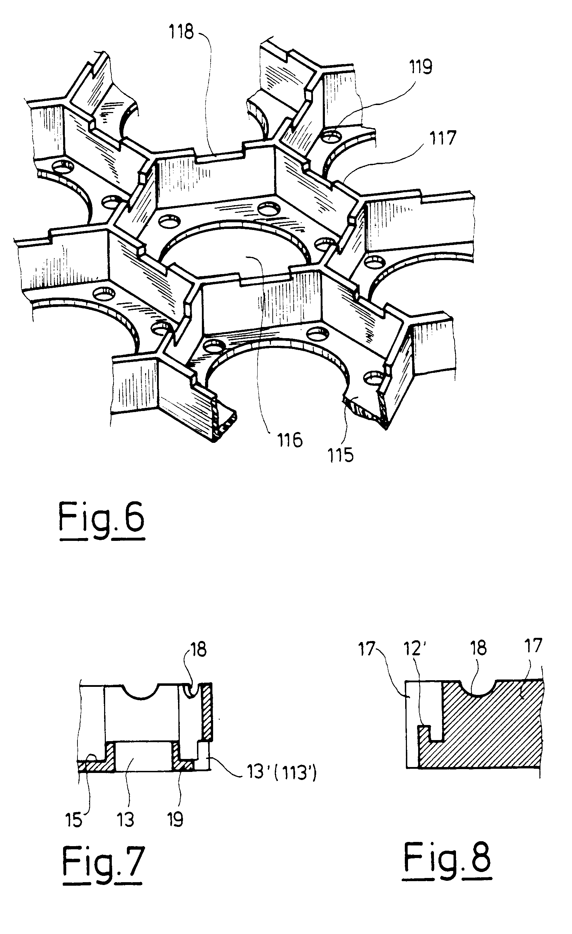

In Fig. 4 ist die Rasengitterplatte 10 im Detail dargestellt. Sie besteht aus wabenförmig ausgebildeten Zellen 14, die durch die Seitenflächen 11 und 11' in den Abmessungen 33 x 33 cm begrenzt ist. Die einzelnen Zellen haben eine Wandlänge von 35 mm und mehr und sind etwa 36 mm hoch. Am oberen Rand der Zellenwände 14 sind mit 18 bezeichnete Aussparungen eingebracht. Sie können, wie die Fig. 7 und 8 zeigen, halbkreisförmig ausgebildet sein. An der Berührungsfläche 11' befinden sich im Winkel zweier nebeneinanderliegender Wände 17 der Zellen T-förmig ausgebildete Verhakungselemente 12'. Die Verhakungselemente 12' sind im ersten und im letzten Zellenwinkel angeordnet. Ihnen gegenüber liegen Verhakungsausnehmungen 13', die in den spitzen Winkel der Wände 17 der letzten Zellenreihe im Bereich der Berührungsfläche 11' angebracht sind. Die Verhakungsausnehmung 13' und das dazu kompatible Verhakungselement 12 sind in den Fig. 7 und 8 im Detail ersichtlich. Der obere T-Balken der Verhakungselemente 12' weist dabei Schultern auf, die kompatibel zu den durch die Zellen 14 gebildeten Winkel im Bereich der Verhakungsausnehmungen 13' sind. An der mit 11 bezeichneten Berührungsfläche sind an den glatten Wänden 17 T-förmige Verhakungselemente 12 angeordnet. Ihnen liegen in den Wänden 17 der gegenüberliegenden Zellenreihe im Bereich der Berührungsfläche 11 Verhakungsausnehmungen 13 gegenüber. Die Verhakungselemente 12 und die Verhakungsausnehmungen 13 sind zueinander kompatibel. Jede Zelle 14 einer Rasengitterplatte 10 ist mit einem Boden verschlossen, in dessen Mitte sich eine kreisrunde Öffnung 16 befindet. Diese ist von einem Bodenring 19 umgeben, der eine Höhe H hat. Die Höhe H kann variiert werden. Je nach Bedarf kann der Bodenring 19 aber auch entfallen.

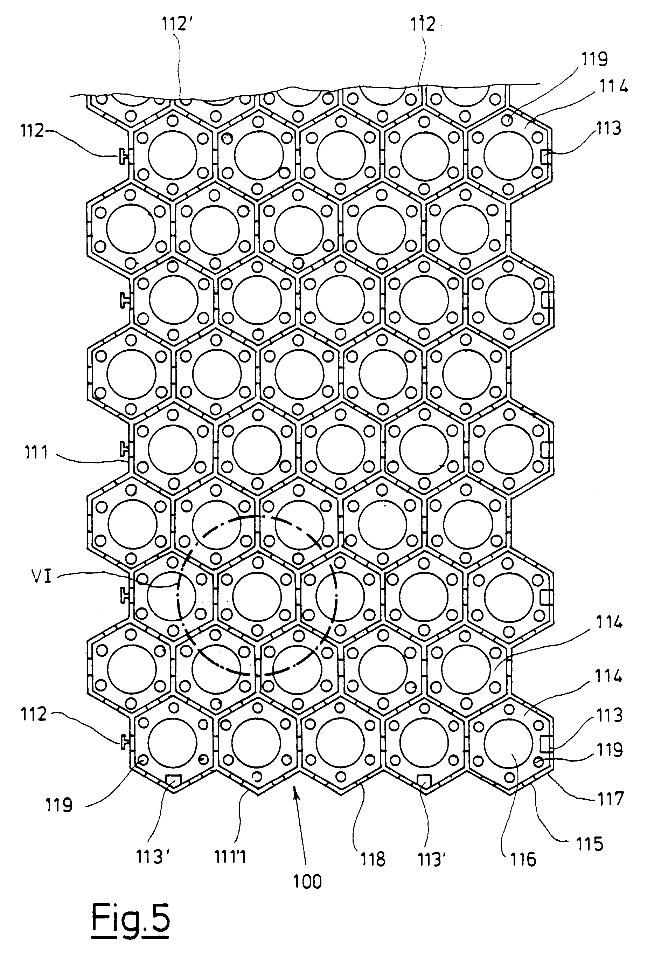

Fig. 5 zeigt die Rasengitterplatte 100. Auch sie ist wabenförmig ausgebildet und besteht aus Zellen 114, die durch einen Boden 115 verschlossen sind. In dessen Mitte befindet sich eine kreisrunde Öffnung 116. Um die kreisrunde Öffnung 116 sind beabstandet untereinander mehrere Zusatzöffnungen 119 gruppiert. Die Zellenwände 114 schließen am oberen Ende, wie auch Fig. 6 zeigt, mit einer Ausnehmung 118 ab. Diese Ausnehmung 118 ist eckig und nicht so tief wie die Ausnehmung 18 der Rasengitterplatte 10 ausgebildet. An einer Berührungsfläche 111' sind Verhakungsausnehmungen 113 ausgebildet. Sie entsprechen den Verhakungsausnehmungen 13 (vgl. hierzu auch Fig. 7). Auf der gegenüberliegenden Berührungsfläche 111' sind T-förmig ausgebildete Verhakungselemente 112' angeordnet, die zu den Verhakungsausnehmungen 113, was den Schulterbereich betrifft, kompatibel sind. An einer mit 111 bezeichneten Berührungsfläche sind T-förmig ausgebildete Verhakungselemente 112 beabstandet an den glatten Zellen 114 angeordnet. Ihnen liegen auf der gegenüberliegenden Berührungsfläche Verhakungsausnehmungen 113 gegenüber, die in die glatten Wände 117 der Zellen 114 eingebracht sind. Die Rasengitterplatte 100 unterscheidet sich von der Rasengitterplatte 10 nicht nur durch die andere Ausbildung der Wasserleit- und Lenkungssysteme, gebildet durch die Öffnungen 116, die Aussparungen 118 und die Zusatzöffnungen 119, sondern auch dadurch, daß sie doppelt so lang ist, d. h. 64 cm, wie die Rasengitterplatte 10 und als Maxiplatte bezeichnet wird.

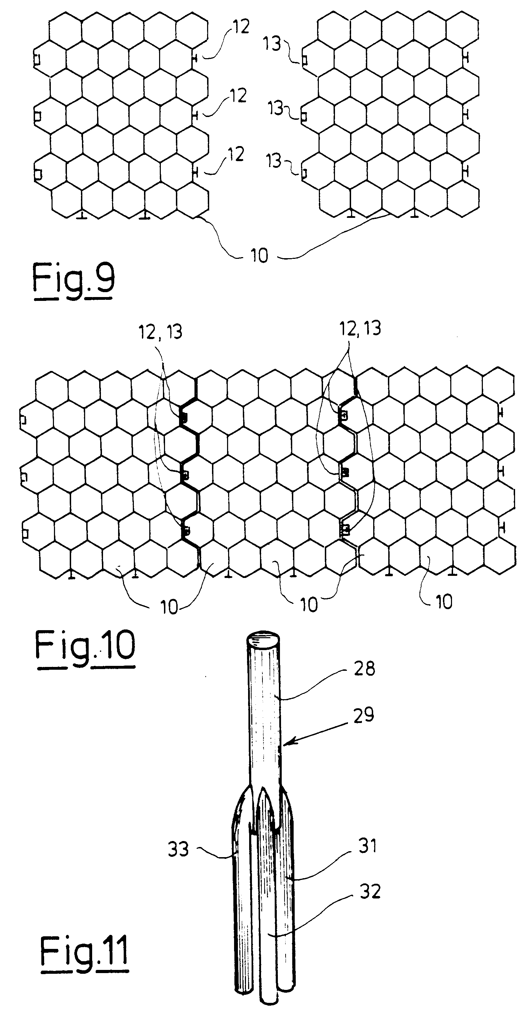

In Fig. 9 liegen sich zwei Rasengitterplatten 10 vor der Verlegung gegenüber. Hierbei wird deutlich, daß die Verhakungselemente 12 den Verhakungsaussparungen 13 genau gegenüber liegen. Gleiches gilt auch für die Verhakungselemente 112 bzw. die Verhakungsaussparung 113.

In Fig. 10 sind drei Rasengitterplatten 10 miteinander verbunden. Es wird deutlich, daß die Verhakungselemente 12 in die kompatiblen Verhakungsausnehmungen 13 eingreifen. Hierbei kommen die Berührungsflächen der Rasengitterplatten 10 aneinander zu liegen und bilden neben der Verhakung eine wirksame und sehr feste Verbindung untereinander, die für die Belastung der Gitterplattenschicht von großer Bedeutung sind.

In Fig. 11 ist ein Mattenbolzen 28 dargestellt. Er besteht aus drei im gleichen Winkel untereinander beabstandete Klammerfußelemente 31, 32, 33. Der Abstand der Klammerfußelemente 31, ... untereinander ist so groß, daß sie vorzugsweise im Bereich dreier aufeinander zulaufender Wände 17 bzw. 117 dreier benachbarter Zellen 114 (vgl. hierzu auch Fig. 6) aufsteckbar sind. Der Abstand der Klammerfußelemente 31, ... kann so ausgebildet werden, daß sie zugleich als Verbindungselement zwischen zwei Rasengitterplatten benutzt werden können. Eine solche Möglichkeit ist immer dann von Vorteil, wenn Rasengitterplatten zum Einsatz kommen, die nur aneinander gesetzt und nicht kraftschlüssig miteinander verbunden werden.

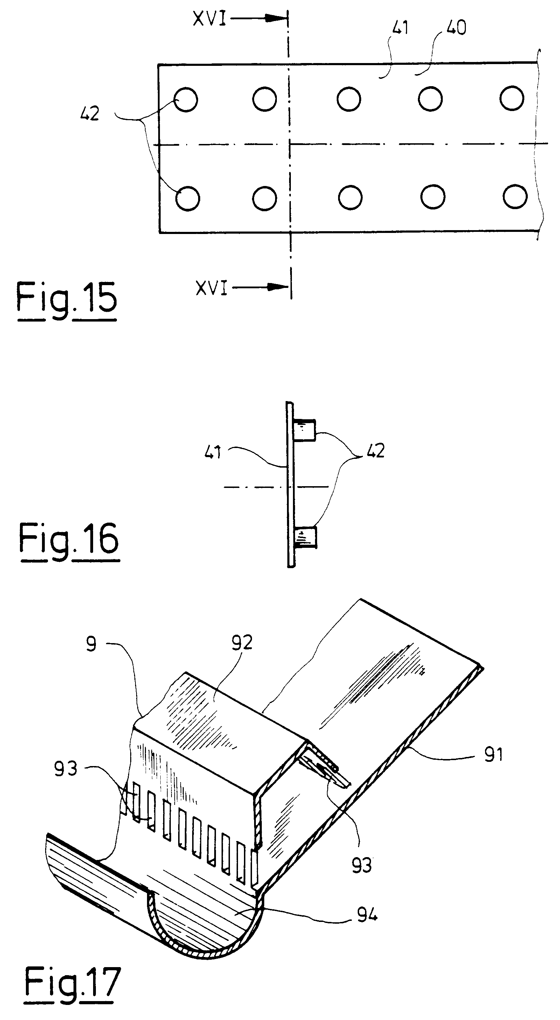

In den Fig. 15 und 16 ist ein Plattenverankerungselement 40 gezeigt. Es besteht aus einem streifenförmig ausgebildeten Flächenelement 41. Das Verankerungsflächenelement 41 kann eine flexible Kunststoffolie, eine biegsame Metallplatte oder dergleichen sein. Auf dem Verankerungsflächenelement 41 sind beabstandet untereinander Ankerelemente 42 in zwei Reihen angeordnet. Der Abstand der Ankerelemente 42 nebeneinander ist so gewählt, daß sie in die Öffnungen 16 bzw. 116 der Zellen 14 bzw. 114, die die letzte Reihe der Gitterplattenschicht 25 bilden, sich einhaken lassen.

Fig. 17 zeigt ein Traufenverankerungselement 9. Es besteht aus einer durchgehenden Platte, die als Aufsetzplattenelement 91 ausgebildet ist und die in einem Traufenelement 94 endet. Auf das Aufsatzplattenelement ist vor dem Traufenelement 94 trapezförmig ausgebildet ein Abstütz- und Drainagekörper 92 aufgesetzt. In ihm sind beabstandet untereinander und nebeneinander Drainageschlitze 93 eingebracht.

An dieser Stelle wird bereits auf eine weitere Ausführungsform des Traufenverankerungselements 9 hingewiesen, wie es in den Fig. 1 und 3 gezeigt ist. Dabei wird die Dachplattenverschalung 2 im Traufenbereich durch ein Traufenbrett 21 begrenzt. In diesem Bereich ist ein Drainagerohr 26 angeordnet, das in einem Kiesbett 20 positioniert ist. Unter dem Kiesbett ist die Untervliesschicht 4 und die wurzelfeste Folie 5 bis hin zur Oberkante des Traufenbretts 20 weitergeführt. Die unterschiedlich ausgebildete Auflageschicht 6 hingegen wird als Grenzmatte 24 zwischen dem Kiesbett 20 und der Vegetationsschicht 23 hochgezogen.

In den Fig. 1, 2a, 2b, 3, 19 und 20 sind unterschiedliche Ausführungsformen für die Ausbildungsform einer Vegetationsschicht 23, die mit Hilfe der Gitterplattenschicht 25 verlegt wird, gezeigt.

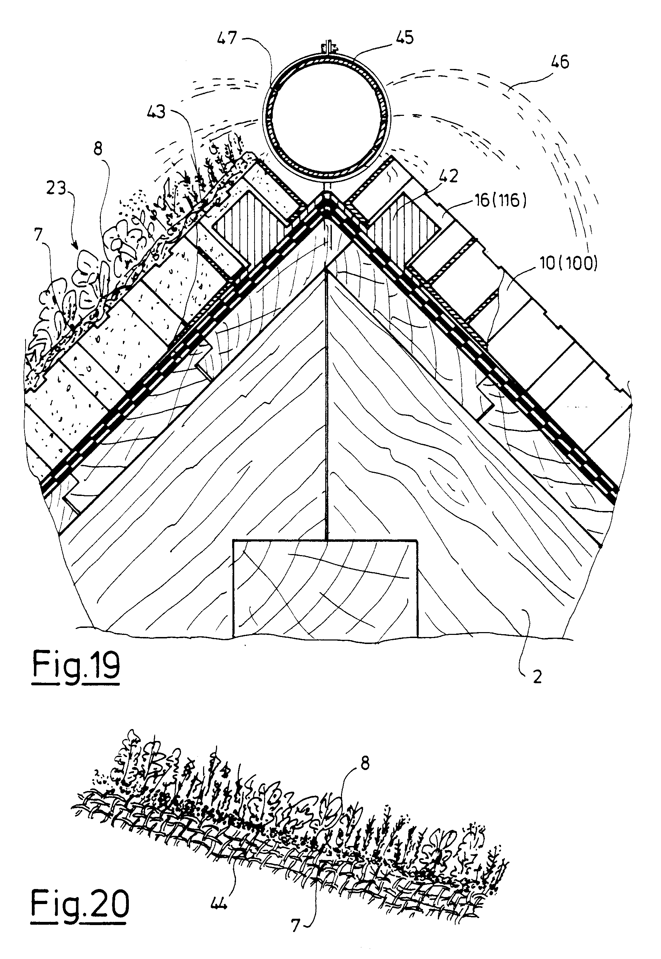

Die erste Ausführungsform einer Vegetationsschicht 23 ist eine Begrünungsmatte 7, wie sie im Detail in Fig. 20 gezeigt ist. Sie besteht aus Kokosfasern 44, in denen mit Substraten und Nährstoffen Satgut eingebracht wird, die zu lebenden Pflanzen 8 ausschlagen. Der Vorteil der Begrünungsmatte 7 ist, daß eine Vorbegrünung unabhängig vom Einsatzort vorgenommen werden kann. Das Einsäen braucht darüber hinaus nicht am Einsatzort vorgenommen werden. Zu diesem Zweck wird in die einzelnen Zellen 14 bzw. 114 als Wachstumssubstrat für extensive Dachbegrünungen ein Dachsubstrat 43 auf der Basis von Lava-Humus als Wachstums-Substanz eingefüllt. Als Wachstums-Substrat kann auch Humus, Steinwolle, Ziegelbruch und/oder Erdreich verwendet werden. Auf diese so ausgefüllte Gitterplattenschicht wird dann die Begrünungsmatte 7, als Vegetationsschicht 23 aufgelegt. Der besondere Vorteil dieser Lösung besteht darin, daß den auf der Vegetationsschicht 23 befindlichen Grünpflanzen die Möglichkeit gegeben wird, durch die Kokosfasern 44 der Begrünungsmatte hindurch zu wurzeln und sich in der Erd- oder Humusschicht zu verankern, die in den Zellen 14 bzw. 114 der Rasengitterplatten 10 bzw. 110 gehalten wird. Auf die Grünpflanzen und die Begrünungsmatte 7 und die darunter liegende Erd- und Humusschicht in den Zellen 14 bzw. 114 kann auftretender Regen zielgerichtet durch die Zellen 14 bzw. 114 gelenkt werden. Je nach dem Einsatzort kann dabei die Rasengitterplatte 10 oder die Rasengitterplatte 110 gewählt werden. Die Zellen 14 bzw. 114 sorgen darüber hinaus, daß durch die Neigung des Schrägdachflächenelementes 35, 36 sich in den einzelnen Zellen 14, 114 Feuchtigkeit ansammeln kann. Diese Feuchtigkeit ermöglicht es den Grünpflanzen 8 bei länger anhaltender Trockenheit aus einem vorhandenen Feuchtigkeitsreservoir die erforderliche Flüssigkeit herauszuziehen. Gleichzeitig wird den Grünpflanzen 8 die Möglichkeit gegeben, die für sie notwendigen Nährstoffe aus den darunter liegenden Schichten zu entnehmen. Insbesondere die Rasengitterplatten 10, 100 ergänzen die Begrünungsmatte derart, daß den Grünpflanzen 8 auf dem Schrägdach die Wachstums- und Lebensbedingungen wie die auf ebener Erde unter natürlichen Bedingungen zur Verfügung gestellt werden. Von besonderem Vorteil ist, daß der in den Zellen befindliche Humus bzw. ein anderes Wachstumssubstrat durch die Schrägstellung nicht herausrutschen können.

Eine zweite Möglichkeit der Schaffung der Vegetationsschicht 23 ist in den Fig. 2a und 2b gezeigt. Hierbei werden die Zellen 14 bzw. 114 der Rasengitterplatten 10 bzw. 100 mit dem bereits erwähnten Dachsübstrat 43 verfüllt. Anschließend wird Samen ausgesät, der dann zu Grünpflanzen 8 wächst. Anstelle einer Begrünungsmatte 7 wird hier eine vorbegrünte Rasengittermatte 10 bzw. 100 auf dem Schrägdachflächenelement 35, 36 verlegt. Auch hier übernimmt das Flüssigkeitssteuerungs- und Leitsystem, das durch die Öffnungen 16 bzw. 116, den Bodenring 19 und die Zutrittsöffnungen 119 gemeinsam mit den Aussparungen 18 bzw. 118 gebildet wird, die Versorgung der Grünpflanzen 8 mit dem notwendigen Wasser bzw. den notwendigen Nährstoffen.

Der Aufbau einer Schrägdachbegrünung, wie sie sich aus dem dargestellten Ausführungsbeispiel ergibt, sei nachstehend erläutert.

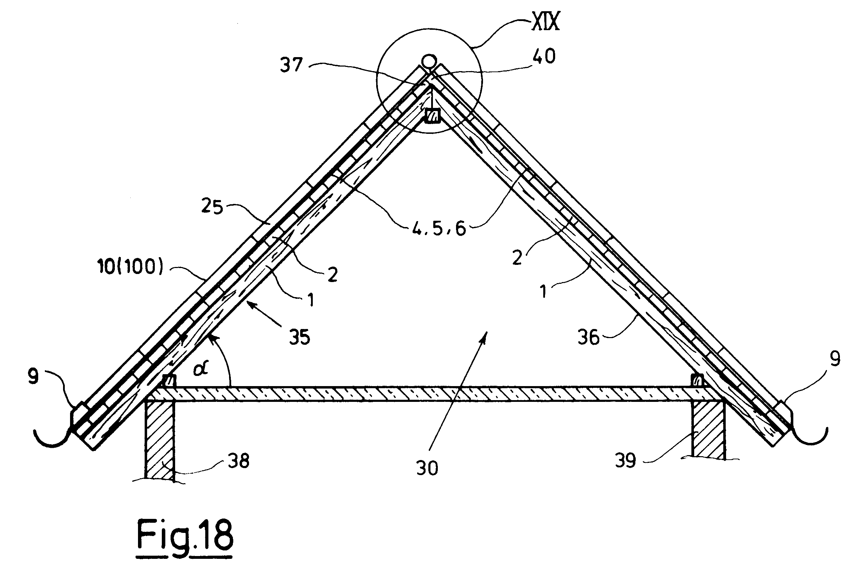

In Fig. 18 ist ein Gebäude dargestellt. Über dessen Seitenwänden 38, 39 erhebt sich ein Spitzdach 30. Das Spitzdach 18 wird durch die bereits beschriebenen Schrägdachflächenelemente 35, 36 ausgebildet. Die Schrägdachflächenelemente 35, 36 sind in einem Winkel α gegenüber dem Unterbau geneigt. Der Winkel α sollte nach Möglichkeit 45° nicht übersteigen. Es sei aber an dieser Stelle angemerkt, daß die Zellen 14 bzw. 114 es ermöglichen, daß ein Winkel α realisiert werden kann, der über 45° liegt.

Die Schrägdachflächenelemente 35, 36 werden, wie bereits beschrieben, ausgebildet durch nebeneinanderliegende Dachbalken 1, die mit einer Dachbretterverschalung 2 aus Dachbrettern 3 aufgebaut ist. Auch andere Werkstoffe wie Kunststoffe, Metall oder dergleichen sind für den Aufbau der Schrägdachflächenelemente 35, 36 einsetzbar. Selbstverständlich ist es, daß anstelle der Dachbalken 1 aus Holz Träger aus Stahl treten können und spezielle Betondecken und dergleichen zum Einsatz kommen können.

Auf der obersten Fläche der Schrägdachflächenelemente 35, 36, in diesem Fall der Dachbretterverschalung 2 mit der aufgelegten Untervliesschicht 4 und der wurzelfesten Folie 5, wird zuerst das Aufsatzplattenelement 91 des in Fig. 17 dargestellten Traufenverankerungselements 9 befestigt. Die Befestigungsstellen, z.B. Nagellöcher, werden mit einem Dichtungsmaterial, z.B. Silikon, verschlossen. Es kann auch eine Zusatzfolie oder zusätzlich oder allein aufgelegt (geschweißt) werden. Das Traufenelement 94 ragt dabei wie eine an sich bekannte Regenrinne über den Traufenbereich hinaus. Anschließend wird die Auflageschicht 6 in unterschiedlicher Ausbildung als Obervliesschicht 61, Speichermatte 62 oder Bautenschutzmatte 63 verlegt. Danach werden die einzelnen Rasengitterplatten 10 bzw. 100, wie bereits anhand der Fig. 9 und 10 erläutert, miteinander verhakt und die Gitterplattenschicht 25 ausgebildet.

Im First 37 des Spitzdachs 30 wird das Plattenverankerungselement 40 flächendeckend ausgelegt. Die Länge der beiden Schrägdachflächenelemente 35, 36 ist von der Traufe bis zum First 37 so lang gewählt, daß die aneinander verlegten Rasengitterplatten deren Länge entsprechen. Im Bereich des Firstes 37 werden die zu oberst zeigenden Öffnungen 16 bzw. 116 in den Böden 15 bzw. 115 der letzten Rasengitterplatte auf die mit 42 bezeichneten Verankerungselemente gesteckt, wie es besonders deutlich in Fig. 19 gezeigt ist. Wie in Fig. 1 gezeigt, werden beabstandet untereinander die mit 28 bezeichneten Mattenbolzen installiert. Für das Halten der Kokosmatte der Begrünungsmatte 7 wurde gefunden, daß pro m² ca. fünf Stück Mattenbolzen zu stecken sind. Wieviel Mattenbolzen 29 zu installieren sind, hängt von der Dachneigung ab, die durch den Winkel α bestimmt wird. Ist der Winkel α < 30°, werden ein Stück pro m² gebraucht, ist er hingegen > 30° und sogar > 45°, sollte ein Stück Mattenbolzen 28 pro m² mit Hilfe der Klammerfußelemente 31, 32, 33 auf die Wände 17 bzw. 117 der Zellen 14 bzw. 114 gesteckt werden. Wie Fig. 19 zeigt, wird zwischen den Enden der beiden sich gegenüberliegenden Gitterplattenschichten 25 auf dem First 37 ein Bewässerungsrohr 45 verlegt. Dieses Bewässerungsrohr 45 weist Flüssigkeitsausnehmungen 47 auf, durch das Benetzungsflüssigkeit 46 zu versprengen ist. Die Schrägdachelemente 35, 36 können nicht nur das Spitzdach 30, sondern auch andere bekannte beliebige Dachformen wie Pultdach, Shetdach ode Tonnendach ausbilden.

Auf die mit dem Dachsubstrat 43 verfüllten Zellen 14 bzw. 114 wird die Begrünungsmatte 7 mit den Grünpflanzen 8 ausgelegt. Die einzelnen Haltestiftelemente 29 bohren sich dabei, wie insbesondere Fig. 1 zeigt, in die Matte aus Kokosfasern 44 hinein und halten die Begrünungsmatte 7 kraftschlüssig auf der Gitterplattenschicht 25 fest. Von besonderer Bedeutung ist, daß durch das Plattenverankerungselement 40 im First 37 und durch die beiden Traufenverankerungselemente 9 (vgl. Fig. 18) im Traufenbereich die Gitterplattenschichten 25 gehalten werden. Von besonderem Vorteil ist, daß das Plattenverankerungselement 40 verhindert, daß die gesamte Last der Vegetationsschicht 23, die aus den verfüllten Gitterplattenschichten 25 und den darauf befindlichen Begrünungsmatten 7 besteht, nur im Endpunkt durch das Traufenverankerungselement 9 gehalten werden muß. Vielmehr werden die einzelnen Kräfte gleichmäßig verteilt. Darüber hinaus stellen die beiden Gitterplattenschichten 25 durch die miteinander verhakten Rasengitterplatten 10 bzw. 100 eine stabile tragfähige Schicht dar, die auch die Dachunterbauten aus Balken 1 und Verschalung 2 entlastet.

Trifft Regen auf die Grünpflanzen 8 auf, wird dieser durch die Kokosfasern 44 in das Dachsubstrat 43 der Zellen 14 weitergeleitet. Von hier aus wird überschüssige Flüssigkeit durch die großen Öffnungen 16 ganz gezielt weiter auf die Auflageschicht 6 weitergegeben. Hierbei wird Feuchtigkeit je nach Wahl der Auflageschicht in unterschiedlicher Menge gespeichert. Überschüssige Feuchtigkeit wird in Richtung Traufe abgeleitet und fließt in das Traufenelement 24, um von dort mit Hilfe eines Fallrohrs zum Abfluß zu gelangen. Feuchtigkeit wird ganz gezielt bedingt durch die Aufnahmefähigkeit der gewählten Materialien durch die Kokosfasern 44, das Dachsubstrat 43 und die Auflageschicht 6 aufgenommen. Die Wurzeln der Grünpflanzen 8 ragen dabei bis in die Auflageschicht 6 hinein und sind so in der Lage, vorhandene Feuchtigkeit für ihr Wachstum und auch Nährstoffe aufzunehmen.

Bei langen Trockenperioden wird durch das Bewässerungsrohr 45, wie Fig. 19 zeigt, gezielt Wasser auf die Oberfläche des Daches gesprengt. Hierbei gelangt das Wasser als Benetzungsflüssigkeit 46 auf die Begrünungsmatte und wird dort, wie bereits beschrieben, wie Regen behandelt. Das Durchsickern überflüssiger Flüssigkeit durch die einzelnen Schichten bis auf die wurzelfeste Folie sorgt dafür, daß auch in den unteren Reihen der Rasengitterplatten, die über der Traufe liegen, Flüssigkeit hineingelangen kann. Diese unteren Reihen benötigen sowieso nicht so viel Flüssigkeit wie die oberen, da in der Regel die Flüssigkeit - sei es Regen oder dergleichen - nach unten durchsacken kann.

Der besondere Vorteil der Verwendung von Rasengitterplatten für die Dachbegrünung und den damit verbundenen vorteilhaften Veränderungen der weiteren Schichten besteht darin, daß eine Gütesicherung der Dachsubstrate und eine verbesserte Zusammensetzung der Vegetationssubstrate möglich ist. Vor allen ist eine zusätzliche Wasserversorgung und Entwicklungspflege der Grünpflanzen gesichert. Die Planung der Dachkonstruktion und der Dachbegrünung an sich ist einfach und sicher realisierbar.

Ein weiterer sehr wesentlicher Vorteil besteht darin, daß die aus den Rasengitterplatten 10, 110 gebildetn Gitterplattenschichten 25, die auf dem Spitzdach 30 lastenden Schneemassen statisch aufnehmen können. Die in den einzelnen Zellen 14, 114 vorhandenen Wurzeln der Grünpflanzen 8 haben darüber hinaus die Möglichkeit, bei einer Überwinterung zu neuen Grünpflanzen 8 aufzuwachsen. Hierdurch wird ein nachträgliches Besäen der Vegetationsschichten 23 vermieden.

### Bezugszeichenliste:

- 1: Dachbalken
- 2: Dachbretterverschalung
- 3: Dachbretter
- 4: Untervliesschicht
- 5: wurzelfeste Folie
- 6: Auflageschicht
- 7: Begrünungsmatte
- 8: Grünpflanzen
- 9: Traufenverankerungselement
- 10: Rasengitterplatte
- 11, 11': Berührungsfläche
- 12, 12': Verhakungselement
- 13, 13': Verhakungsausnehmung
- 14: Zelle
- 15: Boden
- 16: Öffnung
- 17: Wand
- 18: Aussparung
- 19: Bodenring
- 20: Kiesbett
- 21: Traufenbrett
- 22: Dachsubstrat
- 23: Vegetationsschicht
- 24: Grenzmatte
- 25: Gitterplattenschicht
- 26: Drainagerohr
- 28: Mattenbolzen
- 29: Haltestiftelement
- 30: Spitzdach
- 31, 32, 33: Klammerfußelement
- 35, 36: Schrägdachflächenelement
- 37: First
- 38, 39: Seitenwand
- 40: Plattenverankerungselement
- 41: Verankerungsflächenelement
- 42: Ankerelement
- 43: Dachsubstrat
- 44: Kokosfasern
- 45: Bewässerungsrohr
- 46: Benetzungsflüssigkeit
- 47: Flüssigkeitsausnehmung
- 51: Folienflächenelement
- 61: Obervliesschicht
- 62: Speichermatte
- 63: Bauschutzmatte
- 64: Noppen
- 65: Noppenausnehmung
- 66: Tunnelausnehmung
- 67: glatte Vliesfläche
- 91: Aufsetzplattenelement
- 92: Aufsetz- und Drainagekörper
- 93: Drainageschlitz
- 94: Traufenelement
- 100: Rasengitterplatte
- 111, 111': Berührungsfläche
- 112, 112': Verhakungselement
- 113, 113': Verhakungsausnehmung
- 114: Zelle
- 115: Boden
- 116: Öffnung
- 117: Wand
- 118: Aussparung
- 119: Zusatzöffnung
- H: Ringhohe
- α: Dachneigungswinkel

## Patentansprüche

1. Verfahren zur Herstellung einer Schrägdachbegrünung mit einer Vegetationsschicht (23), die auf Plattenelementen (10; 100), die auf einem Schrägdachflächenelement (35, 36) angeordnet sind, ausgelegt wird,
dadurch gekennzeichnet, daß als Plattenelemente zu einer Gitterplattenschicht (25) verlegbare Rasengitterplatten (10; 100) die eine Vielzahl von in einer Wabenstruktur angeordneten Zellen (14) aufweisen, die mit wenigstens einer Flüssigkeitsleitausnehmung (16, 18; 116, 118, 119) versehen sind, verwendet werden.

2. Einrichtung zur Begrünung von Schrägdächern, die wenigstens ein Schrägdachelement (35, 36) aufweisen, mit
- einem Plattenelement (10; 100), die auf dem Schrägdachelement (35, 36) angeordnet sind und
- einer Vegetationsschicht (23), die auf den Plattenelementen (10; 100) angeordnet ist,
dadurch gekennzeichnet,
- daß auf dem Schrägdachelement (35, 36) eine Deckschicht (4, 5, 6) angeordnet ist,
- daß die Plattenelemente Rasengitterplatten (10; 100) sind,
. die aus einer Vielzahl von in einer Wabenstruktur angeordneten Zellen (14; 114) bestehen, die wenigstens eine Flüssigkeitsleitausnehmung (16, 18; 116, 118, 119) aufweisen und
. die mit Verbindungs- und Halteelementen (9, 12, 12', 13, 13', 28, 40; 112, 112', 113, 113') über der Deckschicht (4, 5, 6) als eine Gitterplattenschicht (25) verlegt sind, und
- daß mit der Gitterplattenschicht (25) die Vegetationsschicht (23) gehalten und erhaltbar ist.

3. Einrichtung nach Anspruch 2, dadurch gekennzeichnet, daß jede Rasengitterplatte (10; 100) derart mit Verbindungselementen versehen ist, daß
- an einer durch wandparallele Wände (17) der Zellen (14) einer Zellenreihe ausgebildeten Berührungsfläche (11; 111) an wenigstens jeder zweiten Wand (17; 117) ein T-förmig ausgebildetes Verhakungselement (12; 112) mit einer in Richtung Zelle (14; 114) zeigender Schulter angeordnet ist, dem eine in der Wand (17; 117) in der gleichen Zellenreihe der gegenüberliegenden Berührungsfläche (11; 111) eingebrachte kompatible Verhakungsausnehmung (13; 113) gegenüberliegt, und
- an einer durch die schräg zueinander stehenden Wände (17; 117) einer Zellenreihe gebildeten Berührungsfläche (11'; 111') in wenigstens jedem zweiten Einschlußwinkel eine Verhakungsausnehmung (13; 113) angebracht ist, der in zwischen zwei abgeschrägten Wänden (17; 117) einer Zellenreihe einer gegenüberliegenden Berührungsfläche (11'; 111') gebildeten Winkel ein kompatibles T-förmig ausgebildetes Verhakungselement (12'; 112') gegenüberliegt, an dessen Schulter Anschrägungen angeordnet sind.

4. Einrichtung nach Anspruch 2 oder 3, dadurch gekennzeichnet, daß jede Zelle (14; 114) mit einem Boden (15; 115) verschlossen ist, der eine kreisrunde Öffnung (16; 116) als Flüssigkeitsleitausnehmung aufweist.

5. Einrichtung nach einem der Ansprüche 2 bis 4, dadurch gekennzeichnet, daß der Boden (115) wenigstens einer Zelle (114) wenigstens eine Zusatzöffnung (119) als weitere Flüssigkeitsleitausnehmung aufweist, die um die kreisrunde Öffnung (116) beabstandet untereinander angeordnet sind.

6. Einrichtung nach einem der Ansprüche 2 bis 5, dadurch gekennzeichnet, daß die kreisrunde Öffnung (16) mit einem Bodenring (19) mit einer Höhe (H) umgeben ist.

7. Einrichtung nach einem der Ansprüche 2 bis 6, dadurch gekennzeichnet, daß die Zellenwände (14; 114) eine Länge von 35 mm oder größer haben.

8. Einrichtung nach einem der Ansprüche 2 bis 7, dadurch gekennzeichnet, daß etwa mittig an jedem der oberen Ränder der Wände (14; 114) eine Aussparung (18; 118) als Flüssigkeitsausnehmung eingebracht ist.

9. Einrichtung nach Anspruch 8, dadurch gekennzeichnet, daß die Aussparungen (18; 118) gerundet und/oder eckig ausgebildet sind.

10. Einrichtung nach einem der Ansprüche 2 bis 9, dadurch gekennzeichnet, daß auf wenigstens eine Zellenwand (14; 114) wenigstens einer Rasengitterplatte (10; 110) der Gitterplattenschicht (25) wenigstens zwei Klammerfußelemente (31, 32, 33) eines Mattenbolzens (28) geschoben sind, mit dessen Haltestiftelement (29) als Halteelement die Vegetationsschicht (23) wenigstens teilweise gehalten ist.

11. Einrichtung nach einem der Ansprüche 2 bis 10, dadurch gekennzeichnet, daß die Deckschicht aus
- einer Untervliesschicht (4), die auf dem Schrägdachelement (35, 36) angeordnet ist,
- einer wurzelfesten Folie (5), die auf der Untervliesschicht (4) angeordnet ist, und
- einer Auflageschicht (6), die auf der wurzelfesten Folie (5) angeordnet ist,
besteht.

12. Einrichtung nach Anspruch 11, dadurch gekennzeichnet, daß die Auflageschicht (6) als
- eine Obervliesschicht (61), die eine wenigstens teilweise glatte Vliesoberfläche (67) aufweist,
- eine Speichermatte (62), die Noppen (64) und Noppenausnehmungen (65) aufweist, oder
- eine Bautenschutzmatte (63), die wenigstens eine durchlaufende Tunnelausnehmung (66) aufweist,
ausgebildet ist.

13. Einrichtung nach einem der Ansprüche 2 bis 12, dadurch gekennzeichnet, daß die Vegetationsschicht (23) eine Begrünungsmatte (7) aufweist, die mit einer Vegetation (8) auf der Gitterplattenschicht (25) aufzulegen ist.

14. Einrichtung nach einem der Ansprüche 2 bis 13, dadurch gekennzeichnet, daß die Begrünungsmatte (7) aus Kokosfasern (44) besteht, in der Grünpflanzen (8) als Vegetation angeordnet sind.

15. Einrichtung nach einem der Ansprüche 2 bis 14, dadurch gekennzeichnet, daß die Zellen (14; 114) der Rasengitterplatten (10; 100) mit einem Dachsubstrat (22) wenigstens teilweise verfüllt sind, in der die Grünpflanzen (8) wenigstens teilweise verwurzelbar sind.

16. Einrichtung nach einem der Ansprüche 2 bis 15, dadurch gekennzeichnet, daß die Vegetationsschicht (23) aus vorgegrünten Rasengitterplatten (10; 100) besteht, deren Zellen (14; 114) mit dem Dachsubstrat (22) verfüllt und in der die Grünpflanzen (8) wenigstens teilweise vergegrünt angeordnet sind.

17. Einrichtung nach einem der Ansprüche 2 bis 16, dadurch gekennzeichnet, daß die Gitterplattenschichten (23) zweier Schrägdachelemente (35, 36) im First (37) eines Daches (30) mit wenigstens einem Verankerungselement (40) als Verbindungselement verbunden sind.

18. Einrichtung nach einem der Ansprüche 2 bis 17, dadurch gekennzeichnet, daß das Verankerungselement (40) ein Verankerungsflächenelement (41) aufweist, auf dem beabstandet untereinander Ankerelemente (42) angeordnet sind, die wenigstens teilweise durch die Öffnungen (16) in die Zellen (14) hineinragen.

19. Einrichtung nach einem der Ansprüche 2 bis 18, dadurch gekennzeichnet, daß die Gitterplattenschicht (23) auf den Schrägdachelementen (35, 36) im Traufenbereich des Daches (30) durch ein Traufenverankerungselement (9) als Halteelement wenigstens teilweise gehalten ist.

20. Einrichtung nach einem der Ansprüche 2 bis 19, dadurch gekennzeichnet, daß das Verankerungselement (9) ein Aufsatzplattenelement aufweist,
- daß unter den Untervlies (61) auf dem Schrägdachelement (35, 36) angeordnet ist,
- auf dem ein Abstütz- und Drainagekörper mit wenigstens einem Drainageschlitz (93) angeordnet ist und
- daß mit einem Traufenelement (94) traufenseitig abschließt.

21. Einrichtung nach einem der Ansprüche 2 bis 20, dadurch gekennzeichnet,
- daß die wurzelfeste Folie (5) ein Polyvinylchlorid-(PVC)- oder eine Polyethylen- (PE)-Folie ist,
- daß die Vliesschichten (4, 61) aus Polyamidfasern hergestellt sind,
- daß die Rasengitterplatten (10; 110) als Kunststoff-Spritzgußteile ausgebildet sind,
- daß die Speichermatte (62) aus Polyurethanschaum und die Bautenschutzmatte (63) aus Polyethylen hergestellt sind.
